# EUROPÄISCHE PATENTSCHRIFT

(11) **EP 3 023 166 B1**
(45) Veröffentlichungstag und Bekanntmachung des Hinweises auf die Patenterteilung: **18.08.2021**
(21) Anmeldenummer: 15194457.6
(22) Anmeldetag: 13.11.2015
(51) Int. Cl.: B09B 3/00, F23J 15/00

(54) **VERFAHREN ZUM EINSATZ VON HYDRATISIERTEN SORPTIONSMITTELN IN THERMISCHEN PROZESSANLAGEN**
METHOD FOR USING HYDRATED SORBENTS IN THERMAL PROCESS SYSTEMS
PROCÉDÉ D'UTILISATION D'AGENTS DE SORPTION HYDRATÉS DANS DES INSTALLATIONS DE PROCESSUS THERMIQUES

(30) Priorität: 20.11.2014 AT 508422014
(43) Veröffentlichungstag der Anmeldung: 25.05.2016
(73) Patentinhaber: Andritz AG, 8045 Graz (AT)
(72) Erfinder: FRAISSLER, Gerald, 8043 Graz (AT); ANDERL, Helmut, 8010 Graz (AT)

(56) Entgegenhaltungen:
- EP-A1- 0 435 848
- EP-A1- 2 650 057
- WO-A1-2006/099611
- WO-A1-2014/016235
- US-A1- 2011 000 855

## Beschreibung

Die Erfindung betrifft ein Verfahren zur Begrenzung der Korrosion und Emissionen bei thermischen Prozessanlagen unter Einbindung von bei der Verbrennung freigesetzten Problemstoffen.

Der wirtschaftliche Betrieb von Biomasse, Ersatzbrennstoff oder fossilen Brennstoff verfeuernden thermischen Prozessanlagen, insbesondere Verbrennungs- oder Kesselanlagen, bedarf hoher Brennstoffflexibilitäten. Betriebs- und entsorgungsrelevante Problemstoffgehalte in Form von Salzbildnern und Metallen in den Brennstoffen sind daher auf Dauer auch bei hohem Aufbereitungsaufwand nicht vermeidbar. Unter Salzbildnern werden die Elemente der siebten Hauptgruppe im Periodensystem wie z.B. Chlor sowie Schwefel, Phosphor, Stickstoff, Chrom oder deren Oxide verstanden, als verbrennungskritische Metalle gelten Alkali- und Erdalkalimetalle sowie Schwermetalle (Dichte ≥5 g/cm3) und das Leichtmetall Aluminium. Schwermetalle und das Leichtmetall Aluminium können auch in metallischer Form (als Reinmetall oder als Legierung) im Brennstoff vorliegen und zeigen durch ihre niedrigen Schmelzpunkte ≤1. 000 °C besonders negative Eigenschaften auf den Anlagenbetrieb und die Ascheentsorgung. Weitere durch die Verbrennung verursachte oder im Verbrennungsprozess freigesetzte Problemstoffe sind Dioxine und Furane, Chlorkohlenwasserstoffe, polychlorierte Biphenyle und polyzyklische aromatische Kohlenwasserstoffe.

Durch die Freisetzung der Problemstoffe im Verbrennungsprozess wird ihre Aufkonzentrierung im Abgas und in den Ascheströmen bewirkt. Dies hat zur Folge, dass zum einen metallische Oberflächen, insbesondere Wärmetauscher in der Brennkammer und/oder den nachfolgenden Abgaszügen korrosiv angegriffen werden, zum anderen der Anlagenbetrieb durch Verschlackungen, Bettagglomerationen (bei Wirbelschichtfeuerungen), Verschmutzungen und Anbackungen gestört wird und nicht zuletzt die hinsichtlich Entsorgung relevanten Eigenschaften der anfallenden Aschequalitäten verschlechtert werden können. Bei den Verbrennungsaschen sind von der Aufkonzentrierung insbesondere die Flug- und Filterasche (Ascheanfall bei Abgastemperaturen ≤400 °C) betroffen, zurückzuführen hauptsächlich auf Salzkondensationen bzw. Resublimationen im kälter werdenden Abgasweg. In diesen Aschen vorliegende metallische Phasen können überdies durch Reaktion zu Metallbränden führen oder bei der Entsorgung durch Hydratation explosionsgefährlichen Wasserstoff bilden.

Ein Verfahren zur Eindüsung eines Sorptionsmittels in die Brennkammer zum Verhindern von Hochtemperaturkorrosion ist z.B. aus WO1998003616A1 bekannt. Bei diesem Verfahren wird Bentonit bei Temperaturen von 120 bis 140 °C unter überatmosphärischem Druck sauer aktiviert und vor Eindüsung mit Glasmehl bzw. Glasstaub vermischt. Aufgrund des eher sauren Charakters von Bentonit in Kombination mit Glasmehl bzw. Glasstaub (Molverhältnis Aluminiumoxid : Siliziumoxid <0,13) werden Problemstoffe überwiegend silikatisch eingebunden, womit verbrennungskritische Salzbildner und Metalle im Vergleich zu Stoffen mit basischem Charakter aber nicht so gut fixiert werden können. Damit ergibt sich hier wohl keine Verbesserung hinsichtlich Verschlackungen, Bettagglomerationen, Verschmutzungen und Anbackungen. Das Verfahren ist apparativ sehr aufwändig und daher vermutlich mit hohen Kosten verbunden.

Aus EP1354167A1, EP2381169A2 und US8052803B2 ist bekannt, dass zum Verhindern einer chlorinduzierten Korrosion Schwefelverbindungen, wie z.B. Ammoniumsulfat, Eisensulfat und Schwefelsäure, in die Brennkammer eingedüst werden, mit dem Ziel, die während der Verbrennung freigesetzten kritischen Metalle durch Verschieben des Chlor-Schwefel-Verhältnisses in weniger gefährlichen Sulfaten zu binden. Durch die Eindüsung von Schwefelverbindungen besteht einerseits die Gefahr der Anhebung des Säuretaupunktes im Abgas und in der Folge von Korrosionserscheinungen; andererseits führt die mit der Schwefeldosierung verbundene Erhöhung des Gesamtanteils an Salzbildnern in den Verbrennungsaschen insbesondere "am kalten Ende" des Abgasweges zu einer Erhöhung des Korrosions- und Verschmutzungsrisikos. Der erhöhte Anteil an löslichen Feststoffen verschlechtert überdies die entsorgungsrelevanten Aschequalitäten. Aus der US 2013/0312646A1 und der US 2003/0103882 A1 ist weiters bekannt, dass zur weiteren Verwertung von Kohleflugaschen, aber auch Aschen aus der Hausmüllverbrennung, als bauchemisches Bindemittel, Schichtsilikate (Glimmer, Talk, Chrysotil, Tone/Lehme wie Chlorite, Glaukonit, Illit, Palygorskit, Pyrophillit, Saukonit, Vermiculit, Kaolinit, Montmorillonit) dem Verbrennungsprozess zugesetzt werden. Um die eher reaktionsträgen (starke chemische Bindung von Hydratwasser im Schichtgerüst) Schichtsilikate nach ihrer Einbringung in den thermischen Prozess rascher thermisch zu aktivieren und metallisches Quecksilber zu oxidieren, werden in beiden Verfahren Halogenide und/oder alkalische Pulver zusätzlich als Katalysator eingedüst.

Die WO2014016235 beschreibt ein Sauerstoffverbrennungsverfahren, wobei Kohlenwasserstofffraktionen als Brennstoffe verwendet werden, die einen Vanadiumgehalt und Alkalimetalle Ma aufweisen, wobei Magnesium und ein Silicoaluminat zugesetzt wird, wobei das Molverhältnis SiO2 :Al2O3 im Bereich von 2:1 bis 6:1 liegt, die Brennkammer flammenlos ist bei Temperaturen im Bereich von 1.250 ° - 1.450 °C und unter Überdruckbedingungen arbeitet, das Oxidationsmittel Sauerstoff ist und einen Titer >80 Vol.-% hat, und das Oxidationsmittel in einer Zumischung mit Wasser oder Dampf verwendet wird.

Die EP0435848A1 beschreibt ein Verfahren zur Vermeidung von Dioxinen und Furanen im Abgas. Dazu wird vorgeschlagen, in der Brennkammer zusätzlich zum Schwefelgehalt des Brennstoffes das Schwefelangebot in der Brennkammer zu vergrößern und ein Schwefel/Chlor-Verhältnis im abströmenden Abgas einzustellen. Ziel der gegenständlichen Erfindung ist es, die entstehenden Problemstoffe bereits bei der Entstehung zu fixieren, so dass sie nicht in leicht reaktiver Form in die nachgeschalteten Anlagen und/oder Anlagenteile geraten und dort Schäden anrichten können. Dazu wird ein erfindungsgemäßes Verfahren nach Anspruch 1 vorgeschlagen.

Die Erfindung ist dadurch gekennzeichnet, dass während der Verbrennung bzw. vor Erreichen des Abgasweges ein hydratisiertes Sorptionsmittel mit basischem Charakter zugesetzt wird, wobei als hydratisiertes Sorptionsmittel mit basischem Charakter Geopolymere, hydratisierte hydraulische und latent hydraulische Phasen oder Sedimentite eingesetzt werden und die hydratisierten Sorptionsmittel einen molaren Faktor

Aluminiumoxid : Siliziumoxid ≥0,13 und einen damit basischen Charakter aufweisen, wobei als hydratisiertes Sorptionsmittel mit basischem Charakter Geopolymere, hydratisierte hydraulische und latent hydraulische Phasen oder Sedimentite eingesetzt werden und die hydratisierten Sorptionsmittel einen molaren Faktor Aluminiumoxid : Siliziumoxid ≥0,13 und einen damit basischen Charakter aufweisen, wobei nach dem Zusetzen zum Verbrennungsprozess chemisch gebundenes Wasser und/oder Hydroxidgruppen und/oder Hydroniumionen des hydratisierten Sorptionsmittels abgespalten und reaktive Oxidmischungen gebildet werden können. Durch die alumosilikatische Chemisorption können Problemstoffe aus den Brennstoffen bei den in Verbrennungsprozessen vorliegenden Temperaturen in die Stoffmatrix von zum Verbrennungsprozess zugegebenen Geopolymeren und/oder hydratisierten hydraulischen und/oder hydratisierten latent hydraulischen Phasen und/oder Sedimentite dauerhaft eingebunden werden.

Vorteilhafterweise binden die reaktiven Oxidmischungen durch alumosilikatische Chemisorption Problemstoffe, wie z.B. Chloride und Schwermetalle, in die alumosilikatische Stoffmatrix ein, wobei die Bildung der reaktiven Oxidmischungen bereits bei Temperaturen oberhalb von 450°C erfolgen kann. Dadurch können die im Verbrennungsprozess freigesetzten Problemstoffe noch in der Brennkammer bzw. vor Erreichen des Abgasweges durch Chemisorption in die alumosilikatische Mineralmatrix des Sorptionsmittels dauerhaft und unlöslich eingebunden und auf diese Weise weiteren Reaktionsprozessen entzogen ("inertisiert") werden. Zunächst werden die Problemstoffe mittels Physisorption an der Oberfläche angelagert, bevor sie abhängig von der Verweilzeit und der Temperatur durch alumosilikatische Chemisorption in die Stoffmatrix des Sorptionsmittels eingebunden werden. Durch die Zusammensetzung des Sorptionsmittels können Verschlackungen, Bettagglomerationen, Verschmutzungen und Anbackungen sowie Alkali- und Chlorbursting

### (Einlagerung von Alkalimetallen bzw. Chlor in die Ausmauerung) an der Feuerfestauskleidung, in weiterer Folge

Hochtemperaturkorrosion, wie z.B. durch Chlor, Chloride, Salzschmelzen, Sulfat, Sulfid verursacht, Fouling an den Wärmetauscherflächen und anderen Anlagenteilen sowie schließlich und im Hinblick auf die Entsorgung das Auswaschen von löslichen Feststoffen in den Deponieuntergrund erfolgreich vermindert und unterbunden werden.

Ein weiterer vorteilhafter Aspekt der gegenständlichen Erfindung ist dadurch gekennzeichnet, dass metallisches Aluminium und andere metallische Phasen in den Flug- und Filteraschen abgereichert werden: Durch die alumosilikatische Chemisorption der Salzbildner wird ein Angriff derselben auf die Passivschicht der aus metallischen Brennstoffbestandteilen gebildeten Metalltropfen und damit der Zerfall in feine Metalltröpfchen verhindert, die mit dem Abgasstrom leicht aus der Verbrennung ausgetragen werden. Vielmehr können die metallischen Phasen noch während des Verbrennungsprozesses über Redoxprozesse (z.B. Thermitreaktion) zu für die Anlage unschädlichen Oxiden aufreagiert werden.

Eine günstige Ausgestaltung der Erfindung ist dadurch gekennzeichnet, dass durch die Inertisierung von Problemstoffen bereits während des Verbrennungsprozesses die nachgeschaltete Abgasreinigung kleiner ausgeführt werden oder kann sogar gänzlich entfallen kann.

Für die Funktionalität der alumosilikatischen Chemisorption spielt der Herstellungsvorgang der Geopolymere auf saurem oder alkalischem Weg keine Rolle.

Als Rohmaterial für die Herstellung der Geopolymere dienen alumosilikatreiche Stoffe mit einem Gesamtanteil an Siliziumoxid und Aluminiumoxid von idealerweise ≥50 Masseprozent, bezogen auf die Trockenmasse der Stoffe.

Ein Anteil von Sedimentiten im hydratisierten Sorptionsmittel in Form von Residualsedimentiten wie z.B. Laterit, Bauxit zeigt besonders vorteilhafte Eigenschaften auf die alumosilikatische Chemisorption der Problemstoffe. Ebenso günstig wirkt sich ein Anteil von hydratisierten hydraulischen und/oder latent hydraulischen Phasen wie z.B. Kalziumalumosilikathydrat, Kalziumaluminiumhydrat und Kalziumsilikathydrat in Form von Zementstein und/oder Betonstein aus. Die genannten Stoffe können entweder zerkleinert bereits während der Nassmischung zur Herstellung der Geopolymere beigemengt oder aber den bereits fertig hergestellten Geopolymeren trocken zugemischt werden. Die Korngröße des Sorptionsmittels beeinflusst einerseits die Verweilzeit in der Brennkammer (insbesondere bei Wirbelschichtfeuerungen) und andererseits den Ausnutzungsgrad des Sorptionsmittels.

Erfindungsgemäß kann die Zugabe des hydratisierten Sorptionsmittels abhängig vom Typ der thermischen Prozessanlage entweder gemeinsam mit dem Brennstoff oder anderen Trägermaterialien oder aber direkt in die Brennkammer bzw. in die mit der Brennkammer zusammenhängenden Systeme (z.B. Umlaufsystem bei Wirbelschichtanlagen: Zyklon, Siphon bzw. Bettmaterialrücklauf gekühlt oder ungekühlt) erfolgen. Die Aufgabe kann dabei sowohl in trockener als auch suspendierter Form durchgeführt werden.

## Patentansprüche

1. Verfahren zur Begrenzung der Korrosion und Emissionen bei thermischen Prozessanlagen unter Einbindung von bei der Verbrennung freigesetzten Problemstoffen, wobei Salzbildner und verbrennungskritische Metalle, Dioxine und Furane, Chlorkohlenwasserstoffe, polychlorierte Biphenyle und polyzyklische aromatische Kohlenwasserstoffe als Problemstoffe definiert sind, verbrennungskritische Metalle als Alkali- und Erdalkalimetalle, Schwermetalle mit einer Dichte ≥5 g/cm3, das Leichtmetall Aluminium in metallischer Form und andere tiefschmelzende metallische Phasen mit Schmelzpunkten ≤1.000 °C definiert sind und Salzbildner als die Elemente der siebten Hauptgruppe im Periodensystem, umfassend Chlor, sowie Schwefel, Phosphor, Stickstoff, Chrom oder deren Oxide definiert sind, **dadurch gekennzeichnet, dass** während der Verbrennung bzw. vor Erreichen des Abgasweges ein hydratisiertes Sorptionsmittel mit basischem Charakter zugesetzt wird, wobei als hydratisiertes Sorptionsmittel mit basischem Charakter entweder Geopolymere, hydratisierte hydraulische und latent hydraulische Phasen oder Sedimentite eingesetzt werden, und dass nach dem Zusetzen des hydratisierten Sorptionsmittels zum Verbrennungsprozess eine Abspaltung des chemisch gebundenen Wassers und/oder der Hydroxidgruppen und/oder der Hydroniumionen des hydratisierten Sorptionsmittels erfolgt unter Bildung von reaktiven Oxidmischungen, wobei die hydratisierten Sorptionsmittel einen molaren Faktor von Aluminiumoxid : Siliziumoxid ≥0,13 und einen damit basischen Charakter aufweisen.

2. Verfahren nach Anspruch 1, **dadurch gekennzeichnet, dass** die reaktiven Oxidmischungen durch eine alumosilikatische Chemisorption die Problemstoffe in eine alumosilikatische Stoffmatrix einbinden.

3. Verfahren nach Anspruch 1 oder 2, **dadurch gekennzeichnet, dass** die Bildung der reaktiven Oxidmischungen bei Temperaturen oberhalb von 450°C erfolgt.

4. Verfahren nach Anspruch 2 oder 3, **dadurch gekennzeichnet, dass** metallisches Aluminium und andere metallische Phasen in den Flug- und Filteraschen durch die alumosilikatische Chemisorption von Salzbildnern abgereichert werden.

5. Verfahren nach einem der Ansprüche 2 bis 4, **dadurch gekennzeichnet, dass** die Größe einer nachgeschalteten Abgasreinigung reduziert werden oder die Abgasreinigung gänzlich wegfallen kann.

6. Verfahren nach einem der Ansprüche 1 bis 5, **dadurch gekennzeichnet, dass** die Geopolymere, hydratisierten hydraulischen und latent hydraulischen Phasen sowie Sedimentite variabel in allen Mischungsverhältnissen zueinander gemischt werden können.

7. Verfahren nach Anspruch 1 bis 6, **dadurch gekennzeichnet, dass** als Sedimentite Residualsedimentite, umfassend Laterit und Bauxit, eingesetzt werden.

8. Verfahren nach Anspruch 1 bis 6, **dadurch gekennzeichnet, dass** die hydratisierten hydraulischen und latent hydraulischen Phasen in Form von Zementstein und/oder Betonstein eingesetzt werden.

9. Verfahren nach einem der Ansprüche 1 bis 8, **dadurch gekennzeichnet, dass** die Zugabe des hydratisierten Sorptionsmittels gemeinsam mit dem Brennstoff oder anderen Trägermaterialien erfolgt.

10. Verfahren nach einem der Ansprüche 1 bis 8, **dadurch gekennzeichnet, dass** die Zugabe des hydratisierten Sorptionsmittels direkt erfolgt in die Brennkammer bzw. in die mit der Brennkammer zusammenhängenden Systeme, umfassend Umlaufsystem bei Wirbelschichtanlagen, Zyklon, Siphon bzw. gekühlter oder ungekühlter Bettmaterialrücklauf.

11. Verfahren nach Anspruch 9 oder 10, **dadurch gekennzeichnet, dass** das hydratisierte Sorptionsmittel in trockener oder in suspendierter Form zugegeben wird.

## Claims

1. Method to limit corrosion and emissions in thermal process equipment, integrating the problematic substances released during combustion, where halogens and combustion-critical metals, dioxins and furans, chlorinated hydrocarbons, polychlorinated biphenyls and polycyclic aromatic hydrocarbons are defined as problematic substances, combustion-critical metals are defined as alkali and alkaline earth metals, heavy metals with a density ≥5 g/cm3, the light metal aluminium in metallic form and other low-melting point metallic phases with melting points ≤1,000°C, and halogens are defined as the elements of the seventh group of the periodic table, comprising chlorine, as well as sulphur, phosphor, nitrogen, chromium and their oxides, **characterized in that** a hydrated sorbent of an alkaline nature is added during combustion and before reaching the exhaust system, where either geopolymers, hydrated hydraulic and latent hydraulic phases or sedimentary rocks are used as a hydrated sorbent of an alkaline nature, and **in that** the chemically bonded water and/or the hydroxide groups and/or the hydronium ions of the hydrated sorbent are separated after the hydrated sorbent is added to the combustion process, forming reactive oxide blends, where the hydrated sorbent has a molar factor of aluminium oxide to silica of ≥0.13 and hence is of an alkaline nature.

2. Method according to claim 1, **characterised in that** the reactive oxide blends incorporate the problematic substances into an aluminosilicate material matrix by aluminosilicate chemisorption.

3. Method according to claim 1 or 2, **characterised in that** the reactive oxide blends are formed at temperatures in excess of 450°C.

4. Method according to claim 2 or 3, **characterised in that** metallic aluminium and other metallic phases in the fly and filter ash are depleted by the aluminosilicate chemisorption of halogens.

5. Method according to one of claims 2 to 4, **characterised in that** the size of a subsequent exhaust gas scrubbing system can be reduced or exhaust gas scrubbing can be omitted entirely.

6. Method according to one of claims 1 to 5, **characterised in that** the geopolymers, hydrated hydraulic and latent hydraulic phases and the sedimentary rocks can be blended with one another flexibly in all mixing ratios.

7. Method according to claims 1 to 6, **characterised in that** residual sedimentary rocks comprising laterite and bauxite are used as sedimentary rock.

8. Method according to claims 1 to 6, **characterised in that** the hydrated hydraulic and latent hydraulic phases are used in the form of hardened cement paste and/or concrete stone.

9. Method according to one of claims 1 to 8, **characterised in that** the hydrated sorbent is added together with the fuel or other carrier materials.

10. Method according to one of claims 1 to 8, **characterised in that** the hydrated sorbent is added by being fed directly into the combustion chamber or to the systems connected to the combustion chamber, comprising the circulating system in fluidized bed equipment, cyclone, siphon or bed material return flow, which may or may not be cooled.

11. Method according to claim 9 or 10, **characterised in that** the hydrated sorbent is added as a dry or a suspension product.

## Revendications

1. Procédé pour limiter la corrosion et les émissions dans des installations de processus thermique impliquant des substances dangereuses libérées lors de la combustion, les formateurs de sel et métaux à combustion critique, la dioxine et le furane, les hydrocarbures chlorés, le biphényle polychloré et les hydrocarbures aromatiques polycycliques étant définis comme substances dangereuses, les métaux à combustion critique étant définis comme métaux alcalins et alcalino-terreux, métaux lourds dont la masse volumique est ≥5 g/cm3, le métal léger aluminium sous forme métallique et autres phases métalliques à bas point de fusion ≤1 000 °C et les formateurs de sel étant définis comme les éléments du septième groupe principal dans le tableau périodique, comprenant le chlore, ainsi que le soufre, le phosphore, l'azote, le chrome ou ses oxydes, **caractérisé en ce que** pendant la combustion ou avant d'atteindre le trajet d'échappement, un agent sorbant hydraté à caractère basique est ajouté, comme agent sorbant hydraté à caractère basique étant utilisés soit des géopolymères, des phases hydrauliques hydratées et hydrauliques latentes soit des roches sédimentaires, et **en ce qu'**après l'ajout de l'agent sorbant hydraté au processus de combustion se produit une séparation de l'eau liée chimiquement et/ou des groupes hydroxyde et/ou des ions hydronium de l'agent sorbant hydraté par formation de mélanges d'oxydes réactifs, les agents sorbants hydratés présentant un coefficient molaire de l'oxyde d'aluminium : oxyde de silicium ≥0,13 et présentant ainsi un caractère basique.

2. Procédé selon la revendication 1, **caractérisé en ce que** les mélanges d'oxydes réactifs intègrent par chimisorption aluminosilicatée les substances dangereuses dans une matrice de produit aluminosilicatée.

3. Procédé selon la revendication 1 ou 2, **caractérisé en ce que** la formation des mélanges d'oxydes réactifs s'effectue à des températures supérieures à 450°C.

4. Procédé selon la revendication 2 ou 3, **caractérisé en ce que** l'aluminium métallique et d'autres phases métalliques sont appauvris par chimisorption aluminosilicatée des formateurs de sel dans les cendres volantes et de filtre.

5. Procédé selon l'une quelconque des revendications 2 à 4, **caractérisé en ce que** la taille du dispositif d'épuration des gaz en aval peut être réduite ou le dispositif d'épuration des gaz peut être totalement supprimé.

6. Procédé selon l'une quelconque des revendications 1 à 5, **caractérisé en ce que** les géopolymères, les phases hydratées hydrauliques et hydrauliques latente ainsi que les roches sédimentaires peuvent être mélangés les uns aux autres de manière variable dans tous les rapports de mélange.

7. Procédé selon la revendication 1 à 6, **caractérisé en ce que** comme roches sédimentaires sont utilisées les roches résiduelles, comprenant la latérite et la bauxite.

8. Procédé selon la revendication 1 à 6, **caractérisé en ce que** les phases hydratées hydrauliques et hydrauliques latentes sont utilisées sous forme de pierre de ciment et/ou pierre de béton.

9. Procédé selon l'une quelconque des revendications 1 à 8, **caractérisé en ce que** l'ajout de l'agent sorbant hydraté s'effectue conjointement avec le combustible ou d'autres matériaux porteurs.

10. Procédé selon l'une quelconque des revendications 1 à 8, **caractérisé en ce que** l'ajout de l'agent sorbant hydraté s'effectue directement dans la chambre de combustion ou dans les systèmes raccordés à la chambre de combustion, comprenant le système de circulation pour les installations à lit fluidisé, cyclone, siphon ou dans le conduit de retour de matériau du lit refroidi ou non refroidi.

11. Procédé selon la revendication 9 ou 10, **caractérisé en ce que** l'agent sorbant hydraté est ajouté sous forme sèche ou en suspension.
